# EUROPEAN PATENT SPECIFICATION

(11) **EP 2 975 629 B1**
(45) Date of publication and mention of the grant of the patent: **10.05.2017**
(21) Application number: 14002473.8
(22) Date of filing: 17.07.2014
(51) Int. Cl.: H01H 85/22, H01H 85/54, F16B 39/00

(54) **Mechanical lock for fuse holder in voltage transformer**
Mechanische Verriegelung für Sicherungshalter in Spannungswandler
Blocage mécanique pour porte-fusible dans un transformateur de tension

(43) Date of publication of application: 20.01.2016
(73) Proprietor: ABB Schweiz AG, 5400 Baden (CH)
(72) Inventor: Majerech, Petr, 68606 Uherské Hradiste (CZ); Neumann, Petr, 61700 Brno (CZ); Juris, Zdenek, 667 01 Zidlochovice (CZ)
(74) Representative: Schmidt, Karl Michael

(56) References cited:
- EP-A1- 0 506 998
- FR-A1- 2 483 544
- US-A- 4 625 196
- US-A1- 2006 119 464

## Description

The invention relates to a mechanical lock for a primary contact element to a fuse, which is arranged in a cylindrical fuse holder tube of a voltage transformer, wherein the fuse is arrangend in close electrical and mechanical contact between the primary contact element and a bottom contact element, fixed or fixable at opposite ends of the cylindrical fuse holder tube, and the bottom contact element is electrically connected to the voltage transformer, and the primary contact element is electrically connected or connectable to a primary connection wire, according to the preamble of claim 1.

Known construction of primary contact on voltage instrument transformers with fuse are realized by threads or simple lock contact solution, which provides proper contact between primary contact and the fuse. Both solutions are not possible to use in application with vibrations, because the fixation can be released. Problem is, that in the use of for example medium or high voltage switchgears, the unintended release of the fixation of the fuse result in wrong measurement of nonexisting measurement of voltage. Under security aspects, such situation can result in faulty measurement of voltage, just in such cases, when observing the voltage is highly relevant. Known fuse arrangements are described in the publications US 4 625 196 A, US 2006/119464 A1. Further solutions how to prevent unscrew or released connection is gluing. In most of application is this solution unacceptable, because it is hardly returnable.

So known voltage instrument transformers with fuse have few principles, how to provide proper contact between fuse and primary circuit. The most common is a thread contact, which is reliable when the voltage transformer is placed into steady application without rapid movement or without vibrations. In case of application with vibration or movement, the thread contact must be fixed by glue or other mechanical elements which means generally non-returnable fixation.

So the object of the invention is, enable the use of thread fixation with returnable mechanical lock for voltage transformers.

Basical for the invention is, that at least the bottom contact element is a fixed contact element, and the primary contact element is a fixable contact element, and that the primary contact element is provided with a screw thread, which corresponds with a complementary screw thread of a ring element fixed inside the cylindrical fuse holder at the side of the primary contact element, and that at least one of the screw threads is provided with an at least partial slit orthogonally arranged to the thread long axis in such, that the thread is reversibly be deformable by deformation means, so that the concerning relative rotation between the complementary threads is locked.

So the idea of the invention is, to provide returnable and reliable thread fixation, which is vibration resistant. Proposed fixation can be used for repeated fixation and releasing, needed for the fuse replacement in voltage transformers.
This fixation gives an advantage to operators during a service intervention, which can result in faster replacement, without need of special tools or without need of replacement of other components, except of a screw driver alone.
Simple solution of fixation thread connection, which is possible to disassemble repeatable, and which is providing strong and reliable fixation, preventing releasing of the connection during vibration. The fixation is created by partial split of the main thread. Between two parts of the thread is flexible gap. Increasing or decreasing of this gap is created force to main thread, by fixation screw, which provides a strong fixation of the main thread. According to the invention, the deformation means comprises a further female screw thread arrangend beneath or in parallel to the thread of the primary contact element and a male screw in such, that by inserting the male screw into the female screw thread and screwing it into an end position, the deformation of the thread of the primary contact element is caused.

Furthermore it is proposed, that the primary contact element is a hollow cup-shaped element in which an axial spring element is axially arranged in such, that it presses a contact plate on an end contact of the fuse, wherein the spring, the contact plate and an external primary connection are electrically interconnected.

Furthermore it is proposed, that the spring force is dimensioned as such, that it also introduces an axial force on both contact sides, the primary contact and the bottom contact, supporting a good electrical contacting.

Further advantageous is, that the cylindrical fuse holder is made of insulating material.

Furthermore advantageous is, that the mechanical lock is used for fuse contacting of voltage transformers for medium voltage switching devices.

One alternative embodiment is, that the cylindrical fuse holder is a separate part, fixable at a housing of the voltage transformer.

A second alternative embodiment is, that the cylindrical fuse holder is an integral part of the housing of the voltage transformer.

Simple solution of fixation thread connection, which is possible to
disassemble repeatable, and which providing strong and reliable fixation, preventing releasing of the connection during vibration. The fixation is created by partial split of the main thread. Between two parts of the thread is a flexible gap. Increasing or decreasing of this gap is created force to main thread, by fixation screw, which provides a strong fixation of the main thread.

Such device can be used in every thread connection, where the mechanical property of the material allows small flexible bending of one half of the thread part.

It also is suitable for primary connection of voltage
transformer with fuse, where needed removable and reliable connection between fuse and primary circuit, during vibrations is realized.

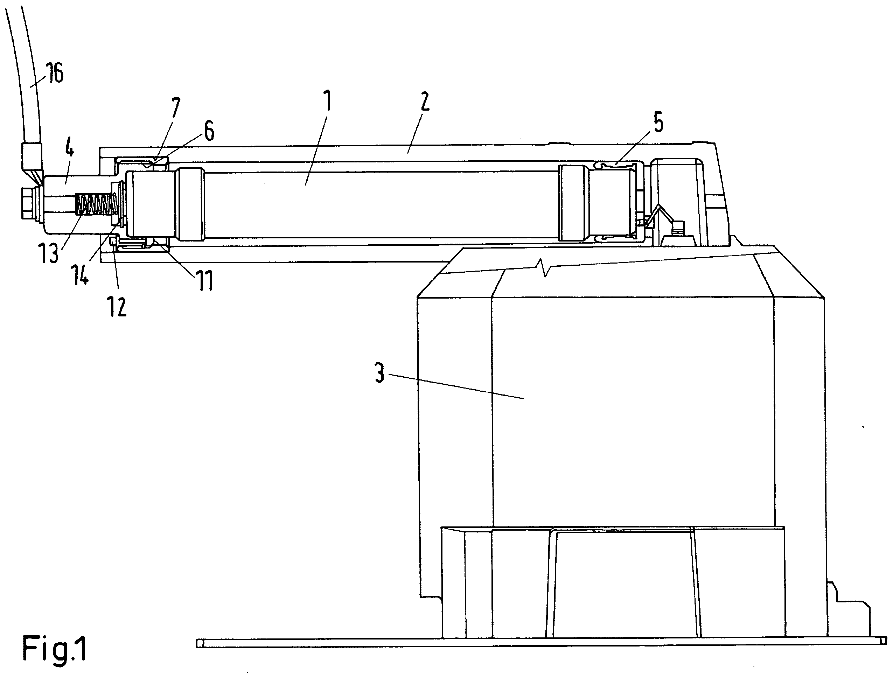

An embodiment of the invention is shown in the figures.
figure 1:
figure 2a, 2b:
   As shown in figure 1, the cylindrical fuse holder 2 is arranged on top of a voltage transformer housing 3 of for example a voltage transformer for a medium voltage switch.
Inside the cylindrical fuse holder 2 the fuse 1 is arranged between a bottom contact element 5, electrically connected with the switch, and a primary contact element 4, at the opposite end of the cylindrical fuse holder 2.

At the primary contact side, the primary contact element 4 comprises a cup-shaped element, made of electrically conductive material. At least along a partial lenght of this cup-shaped element is arranged a male screw threads which is partially splitted by a slit 8, so that the cup-shaped element can be reversibly be deformed, when pressed or extended by a further parallel small female screw thread 11 and a corresponding screw 12.

This male screw thread 6 on the primary contact element 4 is corresponding with, that means screwed in a ring-shaped female screw thread element 7 inside one end of the cylindrical fuse holder.

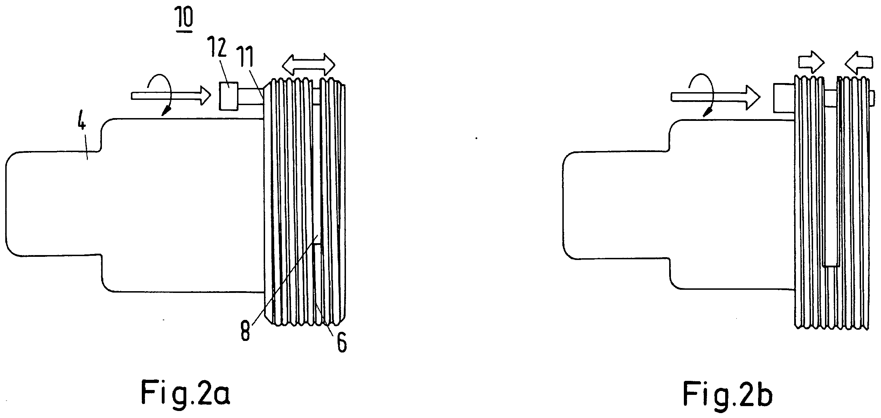

The locking mechanism is later described in figures 2a and 2b.

The primary contact element 4 in figure 1 is hollow in such, that an axial spring element 13 is pressing a contact plate 14 towards the contact of the fuse. An external wire 16 is electrically connected with the primary contact element 4.

Furthermore the axial spring element 13 is dimensioned as such, that its axial force is effectively enhancing the electrical contact between the fuse and the primary contact element 4 as well as the fuse 1 with the bottom contact element 5.

As shown in Fig.2a design of the fixation can be done as a "push system" when
a fixation screw 12 is screwed into first half, go through the slit and recline against the second part. Then the screw pushes 12 to second part where it create a force to the outer thread, and block outer thread by increasing of the flexible gap. The second solution, shown in Fig.2b, is a "pull system", where the fixation screw goes through first half and fixed in the thread in the second half. Tightening here create force decreasing, the flexible gap which block unscrewing of outer thread.

### Position numbering

- 1: fuse
- 2: cylindrical fuse holder tube
- 3: voltage transformer
- 4: primary contact element
- 5: bottom contact element
- 6: screw thread on primary contact element
- 7: complementary screw thread ring element
- 8: slit, partial slit
- 9: long axis
- 10: deformation means
- 11: further female screw thread
- 12: screw
- 13: axial spring element
- 14: contact plate
- 15: external primary connection
- 16: external wire
- 17: housing of the fuse holder

## Claims

1. Mechanical lock for a primary contact element to a fuse, which is arranged in a cylindrical fuse holder tube of a voltage transformer, wherein the fuse is arrangend in close electrical and mechanical contact between the primary contact element and a bottom contact element fixed or fixable at opposite ends of the cylindrical fuse holder tube, and that the bottom contact element is electrically connected to the voltage transformer, and the primary contact element is electrically connected or connectable to a primary connection wire, wherein at least the bottom contact element (5) is a fixed contact element, and the primary contact element (4) is a fixable contact element, and wherein the primary contact element (4) is provided with a screw thread (6), which corresponds with a complementary screw thread (7) of a ring element fixed inside the cylindrical fuse holder (2) at the side of the primary contact element (4), **characterised in that** at least one of the screw threads is provided with an at least partial slit (8) orthogonally arranged to the thread long axis (9) in such, that the thread is reversibly be deformable by deformation means (10), so that the concerning relative rotation between the complementary threads is locked, and that the deformation means (10) comprises a further female screw thread (11) arranged beneath or in parallel to the thread (6) of the primary contact element (4) and a male screw (12) in such, that by inserting the male screw (12) into the female screw thread (11) and screwing it into an end position, the deformation of the thread (6) of the primary contact element (4) is caused.

2. Mechanical lock according to claim 1,
**characterized in that**
the primary contact element (4) is a hollow cup-shaped element in which an axial spring element (13) is axially arranged in such, that it presses a contact plate (14) on an end contact of the fuse, wherein the spring (13), the contact plate (4) and an external primary connection (15) are electrically interconnected.

3. Mechanical lock according to claim 2,
**characterized in that**
the spring force is dimensioned as such, that it also introduces an axial force on both contact sides, the primary contact (4) and the bottom contact (5), supporting a good electrical contacting.

4. Mechanical lock according to one of the aforesaid claims 1 to 3,
**characterized in that**
that the cylindrical fuse holder (2) is made of insulating material.

5. Mechanical lock according to one of the aforesaid claims 1 to 4,
**characterized in that**
that the mechanical lock is used for fuse contacting of voltage transformers for medium voltage switching devices.

6. Mechanical lock according to one of the aforesaid claims 1 to 5,
**characterized in that**
that the cylindrical fuse holder is a separate part, fixable at a housing of the voltage transformer.

7. Mechanical lock according to one of the aforesaid claims 1 to 6,
**characterized in that**
that the cylindrical fuse holder is an integral part of the housing of the voltage transformer

## Patentansprüche

1. Mechanische Verriegelung für ein Primärkontaktelement an eine Sicherung, die in einem zylindrischen Sicherungshalterrohr eines Spannungstransformators angeordnet ist, wobei die Sicherung in engem elektrischem und mechanischem Kontakt zwischen dem Primärkontaktelement und einem Bodenkontaktelement angeordnet ist, das an entgegengesetzten Enden des zylindrischen Sicherungshalterrohrs fixiert oder fixierbar ist, und dass das Bodenkontaktelement elektrisch mit dem Spannungstransformator verbunden ist und das Primärkontaktelement elektrisch mit einem Primärverbindungsdraht verbunden oder verbindbar ist,
wobei mindestens das Bodenkontaktelement (5) ein fixiertes Kontaktelement ist und das Primärkontaktelement (4) ein fixierbares Kontaktelement ist, und wobei das Primärkontaktelement (4) mit einem Schraubgewinde (6) versehen ist, das einem komplementären Schraubgewinde (7) eines innerhalb des zylindrischen Sicherungshalters (2) auf der Seite des Primärkontaktelements (4) fixierten Ringelements entspricht,
**dadurch gekennzeichnet, dass** mindestens eines der Schraubgewinde mit mindestens einem Teilschlitz (8) versehen ist, der orthogonal zur Gewindelängsachse (9) angeordnet ist, dass das Gewinde reversibel durch Verformungsmittel (10) verformbar ist, so dass die betreffende Relativdrehung zwischen den komplementären Gewinden verriegelt ist, und dass das Verformungsmittel (10) ein weiteres Mutterschraubgewinde (11), das unter oder parallel zu dem Gewinde (6) des Primärkontaktelements (4) angeordnet ist, und eine Schraube (12) umfasst, so dass durch Einsetzen der Schraube (12) in das Mutterschraubgewinde (11) und ihr Schrauben in eine Endposition die Verformung des Gewindes (6) des Primärkontaktelements (4) bewirkt wird.

2. Mechanische Verriegelung nach Anspruch 1,
**dadurch gekennzeichnet, dass**
das Primärkontaktelement (4) ein hohles becherförmiges Element ist, in dem ein axiales Federelement (13) axial derart angeordnet ist, dass es eine Kontaktplatte (14) an einem Endkontakt der Sicherung drückt, wobei die Feder (13), die Kontaktplatte (4) und eine externe Primärverbindung (15) elektrisch zusammengeschaltet sind.

3. Mechanische Verriegelung nach Anspruch 2,
**dadurch gekennzeichnet, dass**
die Federkraft derart dimensioniert ist, dass sie auch eine axiale Kraft auf beiden Kontaktseiten einführt, wobei der Primärkontakt (4) und der Bodenkontakt (5) eine gute elektrische Kontaktierung unterstützen.

4. Mechanische Verriegelung nach einem der obigen Ansprüche 1 bis 3,
**dadurch gekennzeichnet, dass**
dass die zylindrische Sicherungshalterung (2) aus einem Isoliermaterial besteht.

5. Mechanische Verriegelung nach einem der obigen Ansprüche 1 bis 4,
**dadurch gekennzeichnet, dass**
dass die mechanische Verriegelung für die Sicherungskontaktierung von Spannungstransformatoren für Mittelspannungsschalteinrichtungen verwendet wird.

6. Mechanische Verriegelung nach einem der obigen Ansprüche 1 bis 5,
**dadurch gekennzeichnet, dass**
dass die zylindrische Sicherungshalterung ein separates Teil ist, an einem Gehäuse des Spannungstransformators fixierbar.

7. Mechanische Verriegelung nach einem der obigen Ansprüche 1 bis 6,
**dadurch gekennzeichnet, dass**
dass die zylindrische Sicherungshalterung ein integraler Teil des Gehäuses des Spannungstransformators ist.

## Revendications

1. Verrouillage mécanique d'un élément de contact principal à un fusible, qui est disposé dans un tube de porte-fusible cylindrique d'un transformateur de tension, dans lequel le fusible est disposé en contact électrique et mécanique étroit entre l'élément de contact principal et un élément de contact inférieur fixé, ou pouvant être fixé, au niveau des extrémités opposées du tube de porte-fusible cylindrique, et que l'élément de contact inférieur est raccordé électriquement au transformateur de tension et l'élément de contact principal est raccordé, ou peut être raccordé, électriquement à un fil de connexion principal, dans lequel au moins l'élément de contact inférieur (5) est un élément de contact fixe et l'élément de contact principal (4) est un élément de contact pouvant être fixé et dans lequel l'élément de contact principal (4) est pourvu d'un filetage de vis (6) qui correspond à un filetage de vis complémentaire (7) d'un élément de bague fixé à l'intérieur du porte-fusible cylindrique (2) sur le côté de l'élément de contact principal (4),
**caractérisé en ce qu'**au moins l'un des filetages de vis est pourvu d'au moins une fente distale (8) disposée de façon orthogonale par rapport au long axe (9) du filetage de telle sorte que le filetage puisse être déformé de manière réversible par un moyen de déformation (10) de telle sorte que la rotation relative correspondante entre les filetages complémentaires soit bloquée et que le moyen de déformation (10) comprenne un autre filetage de vis femelle (11) disposé sous le filetage (6), ou parallèle à ce dernier, de l'élément de contact principal (4) et une vis mâle (12) de telle sorte que, par insertion de la vis mâle (12) dans le filetage de vis femelle (11) et par son vissage dans une position finale, la déformation du filetage (6) de l'élément de contact principal (4) soit provoquée.

2. Verrouillage mécanique selon la revendication 1, **caractérisé en ce que**
l'élément de contact principal (4) est un élément creux cupuliforme dans lequel un élément de ressort axial (13) est disposé axialement de telle sorte qu'il presse une plaque de contact (14) sur un contact d'extrémité du fusible, dans lequel le ressort (13), la plaque de contact (4) et une connexion primaire externe (15) soient interconnectés électriquement.

3. Verrouillage mécanique selon la revendication 2, **caractérisé en ce que**
la force du ressort est dimensionnée de telle sorte qu'elle présente également une force axiale sur les deux côtés de contact, le contact principal (4) et le contact inférieur (5), présentant un bon contact électrique.

4. Verrouillage mécanique selon l'une des revendications 1 à 3 susmentionnées,
**caractérisé en ce que**
que le porte-fusible cylindrique (2) est réalisé en un matériau isolant.

5. Verrouillage mécanique selon l'une des revendications 1 à 4 susmentionnées,
**caractérisé en ce que**
que le verrouillage mécanique est utilisé pour mettre en contact les fusibles des transformateurs de tension pour des dispositifs de commutation de tension moyenne.

6. Verrouillage mécanique selon l'une des revendications 1 à 5 susmentionnées,
**caractérisé en ce que**
que le porte-fusible cylindrique est une pièce distincte, qui peut être fixée à un boîtier du transformateur de tension.

7. Verrouillage mécanique selon l'une des revendications 1 à 6 susmentionnées,
**caractérisé en ce que**
que le porte-fusible cylindrique fait partie intégrante du boîtier du transformateur de tension.
